# EUROPEAN PATENT APPLICATION

(11) **EP 4 704 367 A1**
(43) Date of publication of application: **04.03.2026**
(21) Application number: 24197651.3
(22) Date of filing: 30.08.2024
(51) Int. Cl.: H04L 9/08, H04L 9/32, H04L 9/00

(54) **SYSTEM AND COMPUTER-IMPLEMENTED METHOD FOR CRYPTO-AGILE ISSUANCE OF A MANUFACTURER PUBLIC KEY CERTIFICATE TO A DEVICE**

(71) Applicant: Siemens Aktiengesellschaft, 80333 München (DE)
(72) Inventor: Brockhaus, Hendrik, 85579 Unterbiberg (DE); Mirdha, Kiron, 76137 Karlsruhe (DE); Vaira, Antonio, 81379 München (DE)
(74) Representative: Siemens Patent Attorneys

(57) **Abstract**

System and computer-implemented method for crypto-agile issuance of a manufacturer device certificate (MDCert) to a device (21), the manufacturer device certificate (MDCert) attesting authenticity of the device (21) to a relying party, comprising the steps performed during manufacturing phase of the device (21),
- initializing (S1) onto the device, (21) a sHBS private key (HBSsK) and an associated sHBS public key according to a stateful Hash-Based Signature (sHBS) algorithm,
- issuing (S2), by a certification authority (20), a local certificate (locCert) certifying the HBS public key (HBSpK) and signing the local certificate (locCert) with a first digital signature algorithm using a private key of the certificate
- generating (S4), by the device (21), a manufacturer private key and an associated manufacturer public key according to a second digital signature algorithm,
- issuing (S5), by the device (21) to the device (21), the manufacturer device certificate (MDCert) certifying the manufacturer public key and signing the manufacturer device certificate (MDCert) with the HSB signature algorithm using the sHBS private key (HBSsK).

## Description

### Field of the Invention

The present disclosure relates to a system and a computer-implemented method for crypto-agile issuance of a manufacturer device certificate to a device, the manufacturer device certificate attesting integrity and authenticity to a relying party.

### Background

Nowadays, internet of things (loT) devices are increasingly applied in private and industrial environments. IoT devices communicate with each other or with controllers in public or private communication networks. Public-key cryptography is used to secure authenticity of communication partners and integrity of the exchanged data. Digital signatures are applied in device certificates to provide counterfeit protection. Therefore, the digital signatures need to provide protection over the whole lifetime of the device, which can extend up to 10 to 20 years in industrial environments. Respectively public-key cryptography schemes are required, which are still secure in 10 or 20 years. Stateful hash-based signature schemes (sHBS) make use of hash algorithms and binary Merkle tree, which are well known components and deemed secure enough to withstand both cryptoanalysis and attacks from "quantum adversaries".

Standards like IEEE 802.1AR address manufacturer issued initial device identifier (IDevID) certificates. IDevID certificates are X.509 public key certificates that can be considered as birth certificates for each of the devices. They attest that the product is manufactured by a specific manufacturer and can be used to enable additional capabilities for the device, such as device onboarding. In device onboarding, the IDevID certificate is used to enroll an operational certificate issued by a customer CA, for example, in a customer factory.

Such certificates must remain valid, secure, and trustworthy for the entire lifetime of the device to which they are provisioned, which can exceed twenty years. However, currently known post-quantum algorithms, specifically digital signature algorithms, that can be used for the creation of device certificates, have not been scrutinized enough. There is a non-negligible possibility that the underlying cryptography used in these device certificates could be compromised well before the end of the device's life.

Moreover, currently, it is not clear which post-quantum algorithms to use in a Public Key Infrastructure (PKI) that is used for issuing the device certificates, as there is not enough trust in any of the currently known post-quantum digital signature algorithms. It is worth noting that over time, as crypto-analysis progresses, multiple migrations from one post-quantum algorithm to the next might be required.

Additionally, certification authorities of the PKI will not be able to centrally reissue these device certificates using a different post-quantum digital signature algorithm. This is mostly since Siemens may not necessarily be aware of where these devices are located or may not be provided direct access by its customers.

Therefore, it is the object of the present application to provide a mechanism to rollover a device certificate at any given point in time, independently of the cryptographic algorithms supported by the certificate authority at the time of the first issuance of the device certificate, and without the certificate authority being able to reach out to the device to issue a new device certificate.

### Brief Summary of the Invention

This object is solved by the features of the independent claims. The dependent claims contain further developments of the invention.

A first aspect concerns a computer-implemented method for crypto-agile issuance of a manufacturer device certificate to a device, the manufacturer device certificate attesting authenticity of the device to a relying party, comprising the steps performed during manufacturing phase of the device in a secure manufacturing environment,
- imprinting onto the device, a sHBS private key and an associated sHBS public key including a set of one-time private keys according to a stateful Hash-Based Signature (sHBS) algorithm,
- issuing, by a certification authority, a local certificate certifying the sHBS public key and signing the local certificate with a first digital signature algorithm which deemed secure at the time of issuance using a private key of a certificate authority (CA) and
- storing the local certificate locally on the device,
- generating, by the device, a manufacturer private key and an associated manufacturer public key according to a second digital signature algorithm which deemed secure at the time of generation,
- issuing, by the device, the manufacturer device certificate certifying the manufacturer public key and signing the manufacturer device certificate with the HSB signature algorithm using the sHBS private key.

A second aspect concerns a system for crypto-agile issuance of a manufacturer device certificate (MDC) to a device, the manufacturer device certificate attesting authenticity of the device to a relying party, comprising a secure manufacturing environment a device and a certificate authority, configured to perform the steps during manufacturing phase of the device:
- initializing onto the device, a sHBS private key and an associated HBS public key including a set of one-time private keys according to a stateful Hash-Based Signature (sHBS) algorithm,
- issuing, by a certification authority, a local certificate certifying the sHBS public key and signing the local certificate with a first digital signature algorithm which deemed secure at the time of issuance using a private key of the CA and
- storing the local certificate locally on the device,
- generating, by the device, a manufacturer private key and an associated manufacturer public key according to a second digital signature algorithm which deemed secure at the time of generation,
- issuing, by the device, the manufacturer device certificate certifying the manufacturer public key and signing the manufacturer device certificate with the HSB signature algorithm using the HBS private key.

A third aspect concerns a computer program product directly loadable into the internal memory of at least two digital computers, comprising software code portions for performing the steps as described before, when said product is run on said digital computers.

This approach introduces a new layer between the CA issuing and the manufacturer device certificate located on the device itself, which allows the device to independently issue a new manufacturer device certificate at any given time. This new layer, which is the sHBS key pair and its associated public key certificate, which is the local certificate, makes use of a stateful HBS (Hash-Based Signature) algorithm. The stateful HBS algorithms are considered secure from a cryptographic point of view. Thus, it is assumed that the sHBS algorithm remains secure over the life span of the device. Stateful HBS algorithms make use of hash algorithms and binary Merkle tree, which are well known components and deemed secure enough to withstand both cryptoanalysis and attacks from "quantum adversaries".

### Description of Embodiments

In a further embodiment after the manufacturing phase if the first digital signature algorithm of the CA is no longer considered secure, a new local certificate is issued to the relying party certifying the same sHBS public key, but the new local certificate is signed by a different first signature algorithm which is considered secure at the time of issuing the new local certificate.

This enables to change the first signature algorithm used in the CA when the first signature algorithm is considered no longer secure without any change of the local certificate and the manufacturer device certificate located in the device. Respectively, after changing the signature algorithm in the CA the certificate chain for proving the signature of the manufacturer device certificate can be changed without issuing a new manufacturer device certificate. Thus, the CA signature algorithm and associated to that the CA certificate or even a hierarchically higher root CA certificate can be exchanged without returning the device to the manufacturer. Further, for the relying party, this does not increase the complexity of validating the new CA certificate chain because validation of stateful HBS requires the ability to calculate hashes.

In a further embodiment when the second digital signature algorithm is no longer considered secure, a new manufacturer device certificate is issued by the device to itself, certifying a new manufacturer public key and signing the new manufacturer device certificate with a new sHBS private key using a one-time private key which is available in the device.

This enables an exchange of the second digital signature algorithm, i.e., a cryptographic algorithm used to validate the authenticity of the device as such with a more reliable new second digital signature algorithm. The new manufacturer device certificate is issued by the device itself and requires no direct communication between the CA and the device. The CA only issues a new local certificate to the relying parties.

In a further embodiment the new manufacturer public key is generated by cryptographic primitives according to a new second digital signature algorithm which were transferred to the device, e.g., via a firmware update.

Thus, the issuance of the new manufacturer device certificate can be triggered by the transfer of the cryptographic primitives and thus implicitly on request.

In a further embodiment the manufacturer device certificate is used to enable additional capabilities for the device, preferably the manufacturer device certificate is used to enrol an operational certificate issued by a customer CA.

This manufacturer device certificate provides a trust anchor for all further operational certificates and the associated actions, like e.g., a TLS handshake for secure communication with the relying party.

In a further embodiment the sHBS private key is stored in, and the one-time private key is provided by a secure element located directly within the device.

Secure elements, like a trusted platform module or similar are known and can be integrated into the device without significant additional effort for implementation.

In a further embodiment access to the content of the secure element content is restricted following a "Principle of Least Privilege".

This ensures that the one-time private keys are kept confidential throughout the lifetime of the device.

In a further embodiment a set of one-time private keys is stored at the secure device, the set comprising a predefined number of one-time private keys, and the secure element comprises an atomic, indivisible operation which receives one sHBS one-time key of the set of sHBS one-time keys and data to be signed as input, output a sHBS signature of the data and destroys the HBS one-time private key after the signature is created.

The predefined number of one-time private keys reduces the processing and storage capacity of the secure element. The processing of the signature in the atomic operation ensures that each of the one-time private keys is only used once, which is a precondition for secure and reliable operation of the sHBS algorithm.

In a further embodiment the atomic operation additionally contains a time stamp creation and storage operation which generates and stores a time stamp when each of the one-time private key is used and stores the time stamp in the secure element, wherein the device is considered to be tampered if the temporal sequence of the time stamps is interrupted.

This embodiment provides a mechanism to monitor a correct operation of the sHBS signing process and prevent insecure operation of the device.

In a further embodiment the secure element comprises a secure counter and a random bit generator, and generates a secret seed at initialization time, wherein an atomic operation in the secure element
- generates the one-time private key using the seed and an index generated by the random bit generator,
- selects the one-time private key whose index is equal to the value of the counter,
- increments the counter, and
- digitally signs the data with the selected one-time private key.

This provides an alternative creation, application and monitoring of the sHBS signing process in the device. It reduces possibility of an attack to access the one-time private keys as no set of one-time private keys are stored but generated on request.

In a further embodiment the manufacturer public key, meta-data and the local certificate represented by a hash value or in unmodified form, are published to a trustworthy registry, which is accessible, and auditable, by the relying parties that will validate the manufacturer device certificate.

In case if the device needs a new local certificate issued with a CA issued public key certificate, at any given point in time, the CA can search the hash tree for the meta-data of the device and the manufacturer public key of the device it intends to re-issue the local certificate. Thus, all information is available to issue a new local certificate at any point in time. The trustworthy registry being auditable further increases the level of trust afforded by this solution.

In a preferred embodiment the trustworthy registry is structured as a hash tree containing the hash value of the local certificate as leave or the trustworthy registry is realized as a distributed ledger.

This ensures integrity of the local certificate.

### Brief description of the drawings

The invention will be explained in more detail by reference to accompanying figures. Similar objects will be marked by the same reference signs.
- Figure 1: schematically illustrates a signature scheme of a stateful hash-based digital cryptography.
- Figure 2: schematically illustrates a certificate chain of a device certificate according to the state of the art.
- Figure 3: schematically illustrates a certificate chain of a manufacturer device certificate issued according to the inventive method.
- Figure 4: shows an embodiment of the inventive method as a flowchart.
- Figure 5: shows an exchange of a local certificate due to a changed CA keypair according to an embodiment of the inventive method.
- Figure 6: shows an exchange of a manufacturer device certificate according to an embodiment of the inventive method.
- Figure 7: shows a handling of a used one-time private key according to an embodiment of the inventive method.
- Figure 8: schematically illustrates an embodiment of the inventive system.

It is noted that in the following detailed description of embodiments, the accompanying drawings are only schematic, and the illustrated elements are not necessarily shown to scale. Rather, the drawings are intended to illustrate functions and the co-operation of components. Here, it is to be understood that any connection or coupling of functional blocks, devices, components or other physical or functional elements could also be implemented by an indirect connection or coupling, e.g., via one or more intermediate elements. A connection or a coupling of elements or components or nodes can for example be implemented by a wire-based, a wireless connection and/or a combination of a wire-based and a wireless connection.

Functional units can be implemented by dedicated hardware, e.g., processor, by firmware or by software, and/or by a combination of dedicated hardware and firmware and software. It is further noted that each functional unit described for an apparatus can perform a functional step of the related method and vice versa.

### Technological Background

Throughout this description the expression "stateful hash-based signature" will be abbreviated by sHBS for better readability. Further the expressions private key and secret key is used synonymously irrespective of the type of private/secret key, e.g., sHBS one-time private/secret key or CA privat/secret key. The private key is abbreviated with sk in contrast to a public key which is abbreviated with pk.

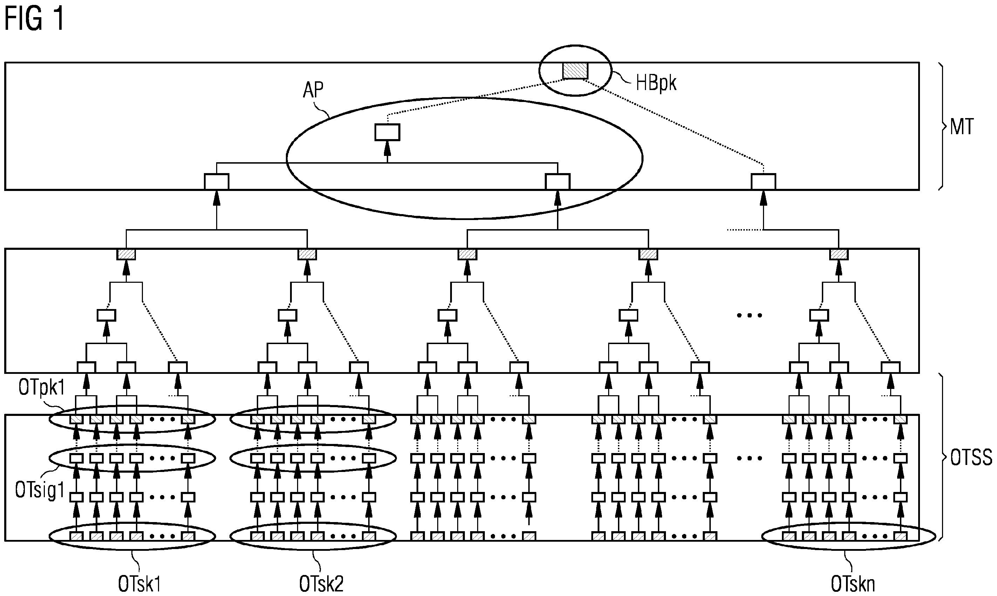

Figure 1 shows a structure of a stateful hash-based cryptography function, i.e., a stateful hash-based signature scheme sHBS. Hash-based signature schemes combine a one-time signature scheme OTSS with a Merkle tree structure MT. Since a one-time signature scheme key can only securely sign a single data structure, i.e., a message or a digital certificate, it is practical to combine many such keys within a single, larger structure. A Merkle tree structure MT is used to this end. In this hierarchical data structure, a hash function and concatenation are used repeatedly to compute tree nodes.

Hash-based signature schemes are stateful, meaning that signing requires updating the private key, unlike conventional digital signature schemes. For sHBS schemes, signing requires keeping state of the used one-time keys and making sure they are never reused. In this way a one-time private key OTsk is uniquely used to generate a one-time signature OTsig, the one-time signature OTsig is uniquely tied to a one-time public key OTpk. A hash-based public key HBpk is determined based on all one-time signature schemes and builds the root of the Merkle tree. The hash-based public key HBpk is published to verify all hash-based digital signatures generated based on one of the one-time private keys OTsk.

As an example, according to the eXtended Merkle Signature Scheme XMSS described in the RFC 8391, Winternitz One-Time Signature Plus (WOTS+) private keys are generated using a secret seed value and an index value. The index value is updated for every hash-based signature such that only unique WOTS+ private keys are generated. To guarantee the security of the XMSS cryptosystem, a XMSS signer generating the XMSS signature must guarantee that the index value is never used more than once. This can be achieved using a secure monotone counter, which can be neither decreased nor reset. This is typically a very strong requirement which could be even circumvented in some cases, e.g., by modifying the counter during the signature computation after the counter has been securely loaded from memory. There is no way for the XMSS verifier to check if the XMSS signer is behaving correctly.

In cryptography, a public key certificate, also known as a digital certificate or identity certificate, is an electronic document used to prove the validity of a public key. The certificate includes the public key and information about it, information about the identity of its owner, called the subject, and the digital signature of an entity that has verified the certificate's contents, called the issuer. If a relying party examining the certificate trusts the issuer and finds the signature to be a valid signature of that issuer, then it can use the included public key to communicate securely with the certificate's subject. The relying party is meant here to be a device or processing unit which represents the relying party.

A digital signature is a cryptographic technique used to verify the authenticity and integrity of a digital message or document, like the public key certificate. It works as follows:
In a first step a key pair is generated comprising a private key and a public key. The private key is kept secret, whereas the public key is distributed freely. When a document has to be signed, a mathematical algorithm creates a unique hash, which is a fixed-length string of characters, based on the document's content. This hash is like a digital fingerprint of the document. The hash is then encrypted using the private key, which is part of a pair of cryptographic keys. This encrypted hash, along with the hashing algorithm, forms the digital signature. The digitally signed document is sent to the recipient, here relying party, along with the public key in form of the public key certificate. The relying party uses the public key from the public key certificate to decrypt the hash. It also generates a new hash from the received document using the same hashing algorithm. If the decrypted hash matches the newly generated hash, it confirms that the document has not been altered and that the signature is valid.

According to current practice, device manufacturers or their suppliers produce devices, and after production, the device receives its initial device certificate, or in the terms of standard IEEE 802.1 AR, an initial device identifier IDevID. The IDevID is a globally unique X.509 certificate, which is - in most cases - issued by the device manufacturer. It can consist of manufacturer-signed authorization information, a secret private key corresponding to a public key of the device certificate, and optionally a certificate chain required to facilitate the use of the device certificate. It has an unlimited lifespan (valid until 9999-12-31) and is securely stored on the device. During the device's lifetime, it is used to identify the device and to use its secrets for signing operations that prove the possession of the secrets.

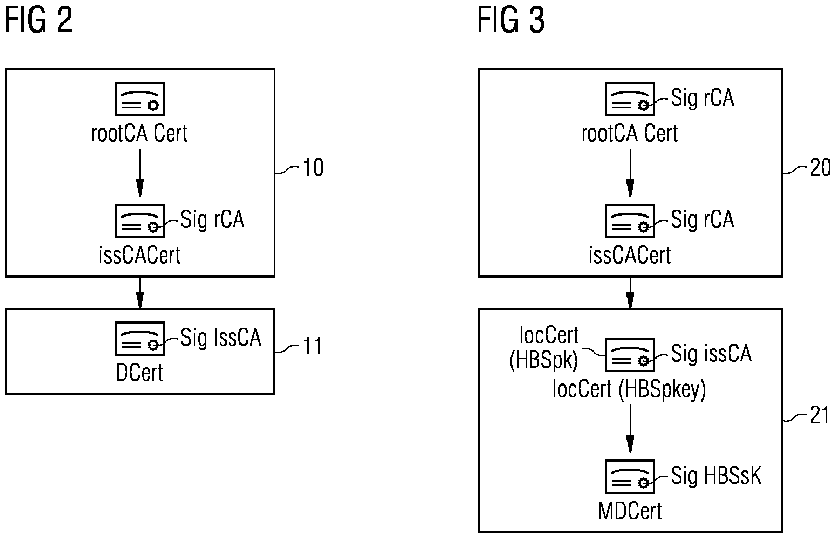

Fig. 2 depicts a traditional device certificate hierarchy as defined by standard IEEE 802.1AR in which a root certificate rootCACert and an issuing CA certificate issCACert are hosted in a trust center 10 and the device certificate DCert, along with its associated manufacturer private key, on the device.

### Description of Examples

Fig. 3 depicts a new proposed certificate hierarchy, which is the core idea of the described method. In this new certificate hierarchy, a certificate authority, further named CA, in a trust center 20 certifies a sHBS public key HBSpK by issuing the device 21 a stateful HBS public key certificate, referred in this document as local certificate locCert, which in turn certifies an actual manufacturer device certificate MDCert.

Both the local certificate locCert and the manufacturer device certificate, as well as their associated private key material, i.e., the sHBS private key and a manufacturer private key, are stored directly within the device 21. This allows the device 21 to independently sign a new manufacturer device certificate MDCert whenever necessary. A new manufacturer device certificate MDCert can be signed and issued, for example, in case the digital signature algorithm associated with the key pair of the manufacturer device certificate MDCert, in the following called the second digital signaling algorithm is no longer deemed secure. Prior to performing this activity, the device 21 will have to be updated with a new second digital signature algorithm, i.e, new cryptographic libraries, comprising cryptographic algorithms and cryptographic primitives, that will allow the device 21 to use the new cryptographic algorithm. In this scenario the issuing CA in the trustcenter 20 does not need to be directly involved in the issuance of the new manufacturer device certificate MDCert.

On the contrary, if a first digital signature algorithm, used by the issuing CA to sign the local Certificate locCert, can no longer considered secure a new issuing CA key pair should be generated and a new issuing CA certificate issCert should be issued to re-issue a new local certificate localCert, for the same sHBS public key HBSpK, but using the new first digital signature algorithm. Potentially also a new root CA and a new root CA certificate RootCACert must be set-up. The new local certificate locCert can be published and made available to the relying parties that will need to validate the certificate chain associated with the manufacturer device certificate MDCert.

In Fig.3 a root CA certificate rootCACert is show in the trust center 20 which is issued by a root CA itself, i.e., the root CA certificate rootCACert is signed by the root CA. The root CA and the root CA certificate rootCACert build the root of trust which is believed to be trustworthy as such. The issuing CA certificate issCACert is signed by the rootCA
or an intermediate CA between the root CA and the issuing CA. The MDCert is successfully evaluated only if the signatures of the complete certificate chain up to the root CA certificate is validated successfully. I.e., the signature of the MDCert generated with the SigHBSsK, the signature Sig issCA of the local Certificate locCert generated with the private key of the issuing CA and the signature SigrCA of the issuing CA certificate issCACert generated by a private key of the root CA have to be successfully evaluated. The manufacturer device certificate is used to enable additional capabilities for the device, preferably the manufacturer device certificate is used to enroll an operational certificate issued by a customer CA.

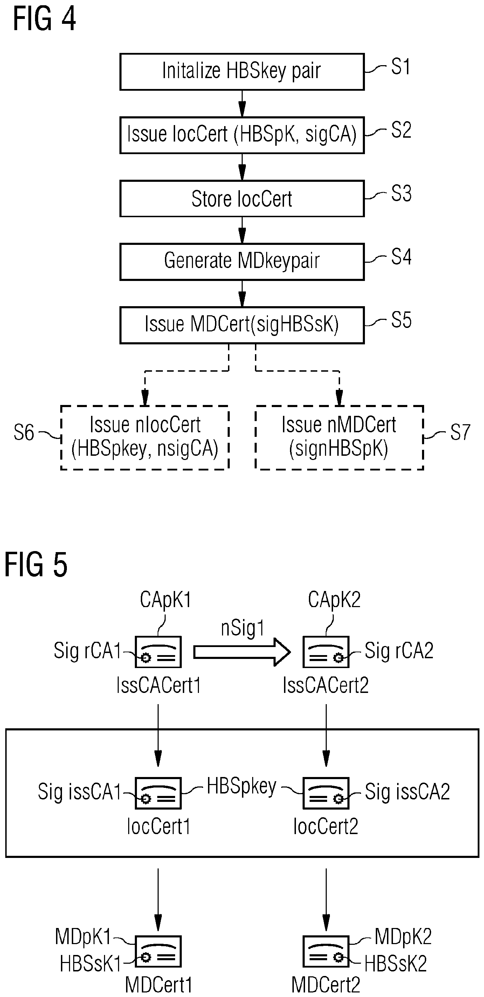

The method is depicted in Fig.4 and described in more detail in the following. To attain a crypto-agile issuance of a manufacturer device certificate to a device, wherein the manufacturer device certificate MDcert attests authenticity of the device to a relying party, following computer-implemented method is proposed.

During manufacturing phase of the device, the device is initialized by imprinting onto the device 21, an sHBS key pair comprising of a sHBS private key and an associated HBS public key according to a stateful Hash-Based Signature (sHBS) algorithm, see step S1. Further during the manufacturing process the device 21 needs to be issued a manufacturer device certificate MDCert. For this reason, the issuing CA, further simply called CA only, issues a local certificate locCert certifying the sHBS public key and signing the local certificate locCert with a first digital signature algorithm using a private key of the certificate authority, see S2. The first digital signature algorithm is deemed secure at the time of issuance and is locally stored on the device 21. The local certificate locCert is stored locally on the device 21, see S3.

The device 21 generates a manufacturer device keypair MDkeypair comprising a manufacturer private key and an associated manufacturer public key according to a second digital signature algorithm also deemed as secure at that time, see step S4. This manufacturer public key is then signed using the stateful HBS private key that corresponds to the Issuing Certificate. I.e. a manufacturer device certificate MDcert certifying the manufacturer public key is issued by the device 21 and signed with the HSB signature algorithm using the sHBS private key by the device 21 to the device 21. The manufacturer device certificate MDCert comprises further meta-data characterizing the device 21. The first digital signature algorithm and the second digital signature algorithm can be different, but also the same digital signature algorithms.

From the perspective of the relying party that will need to validate the manufacturer device certificate MDCert, the only impact will be that the certificate chain will have an extra layer, and it will need to validate the stateful HBS signature. In terms of implementation on the relying party, validation of the stateful HBS signature does not increase the complexity of validation because validation of stateful HBS requires the ability to calculate hashes. This is typically already possible for relying parties that intend to validate any type of digital signature.

After the manufacturing step, the device is transferred to a customer and deployed in the field where its manufacturer device certificate MDCert can be used as intended.

After the manufacturing phase, if the first digital signature algorithm of the CA, which was used to sign the local certificate locCert, is no longer considered secure, a new local certificate locCert is issued to the device 21 certifying the same sHBS public key, but the new local certificate locCert is signed by a different first signature algorithm which is considered secure at the time of issuing the new local certificate, see S6. I.e., if the algorithms utilized by the root CA and issuing CAs, for respectively issuing the issuing CA certificate issCACert and the local certificate locCert, are no longer considered secure, they will need to be re-issued using state-of-the-art digital signature algorithms. If this occurs, the (issuing) CA will also issue a new local certificate locCert.

Fig. 5 shows an evolution of the certificate chain on the device when the first digital signature algorithm is replaced by a new first digital signature algorithm nSig1 at the (issuing) CA. Evidently, the only constant in this architecture is the sHBS public key in the local Certificate locCert.

In the initial situation, see left certificate chain of Fig.5, the CA certificate issCACert1 certifies a first public key of the issuing CA CApkey1 and is signed, for instance, with a signature of a root CA SigrCA1. The local certificate locCert1 certifies the sHBS public key HBSpK of the local certificate and is signed with a signature of the (issuing) CA SigissCA1. The manufacturer device certificate MCert1 of the device 21 certifies the MD public key MDpK1 and is signed with the sHBS private key HBSskey1.

When the (issuing) CA and all hierarchically higher CA s are updated with a new first signature algorithm nSig1 the resulting chain of certificates has the following structure, see right certificate chain of Fig.5. The CA certificate issCACert2 certifies a second public key of the issing CA CApK2 and is signed with a signature of a root CA SigrCA2. The local certificate locCert2 certifies the same sHBS public key HBSpK as before the change of the first digital signing algorithm. The local certificate locCert2 is signed with the new signature algorithm of the (issuing) CA SigissCA2. The manufacturer device certificate MCert2 of the device 21 certifies a new MD public key MDpK2 and is signed with a new sHBS private key HBSsK2. Here it was assumed that also the second digital signing algorithm applied for the manufacturer device keypair has been changed. If the second digital signing algorithm has not been changed the second manufacturer device certificate MDCert2 would be the same as the first MDC MDCert1.

In other words, the same stateful sHBS public key will be certified, but a different first digital signature algorithm will be employed by the (issuing) CA to sign the stateful HBS public key itself, resulting in the issuance of a new local certificate. If this situation takes place, the new CA certificate chain and the new local certificate nlocCert do not necessarily have to be delivered to the device 21. It is sufficient that the new CA certificate chain and the new local certificate nlocCert are made available to the relying party responsible for authenticating the device 21 or validating a signature issued by it at certificate validation time.

During regular operations, if the second digital signature algorithm is no longer considered secure, the device 21 can be upgraded to handle newer cryptographic primitives. Thereafter, the device 21 is triggered to generate a new manufacturer key pair and sign a corresponding new manufacturer device certificate nMDCert with a next one-time private key of the stateful HBS scheme. Potentially also the root CA and issuing CA need to be updated to use the new crypto algorithms, i.e., the new second digital signature algorithm. In other words, when the second digital signature algorithm is no longer considered secure, a new manufacturer device certificate nMDCert is issued by the device 21 to itself, certifying a new manufacturer public key and signing the new manufacturer device certificate nMDCert with a new sHBS private key using a one-time private key which is available in the device, see step S7. The new manufacturer public key MDpK2, see Fig.5, is generated by cryptographic primitives according to a new second digital signature algorithm which were transferred to the device 21.

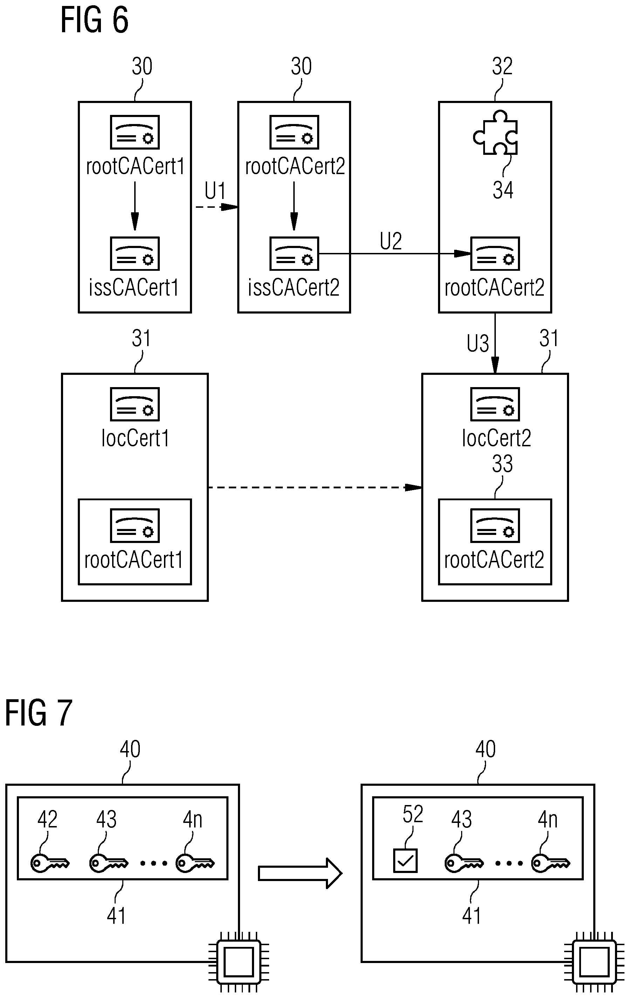

Fig.6 shows the situation when a device 31 is updated with a new second digital signature algorithm which has to be applied for the manufacturer device certificate MDCert and the respective update of the local certificate. The update can be performed not only for one device 31 but a multitude of devices using the outdated, e.g., no longer secure second signing algorithm.

Whenever the cryptographic algorithm, i.e., the second digital signature algorithm used for evaluating the current manufacturer device certificate on the device 31 in the field needs to be replaced, the manufacturer chooses a different algorithm suitable for the device 31 which is secure enough for issuing manufacturer device certificates.

The manufacturer sets up a private key infrastructure, shortly called PKI, by applying the suitable new cryptographical algorithm, i.e., new second signing algorithm in a trust center 30 used in the root CA and the issuing CA. Respectively, a new root CA certificate rootCACert2 and a new issuing CA certificate issCACert2 are generated and issued to the root CA and issuing CA respectively, see U1 in Fig.6. Trust anchor information of the root CA is contained in the new root CA certificate rootCACert2 and is preferably provided as self-signed certificate.

The manufacturer develops a firmware update 32 for the device 31 which implements cryptographic primitives 34, for the newly selected second signing algorithms and contains the trust anchor information, i.e., the new root CA certificate rootCACert2 of the new root CA. The firmware update 32 is transferred to the device 31, see U3. The new issuing CA issues a new local certificate locCert2 to the device31 including the device specific stateful HBS public key. This local certificate locCert2 must be made available to any relying party required to validate a new manufacturer device certificate. Thus, the local certificate locCert1 and the root CA certificate rootCACert1 of device 31 is updated to a new local certificate locCert2 and new root CA certificate rootCACert2.

Handling of the sHBS private key in the device is depicted in Fig.7 and described in the following.

During the manufacturing phase, a device 40 is initialized with a stateful HBS private key and the corresponding public SHBS key. Preferable, this is performed when also the manufacturer device certificate is imprinted on it. The sHBS private key is stored in and provided by a secure element a secure element 41 located directly within the device 40. The secure element 31 is a tamper resistant cryptographic component that provides security, integrity and confidentiality to the data stored in it.

Access to the content of the secure element 41 may is restricted, preferably following a "Principle of Least Privilege", to make sure that the one-time private keys 42, 43,..., 43 are kept confidential throughout the lifetime of the device. In information security, computer science, and other fields, the principle of least privilege requires that in a particular abstraction layer of a computing environment, every module, such as a process, a user, or a program, depending on the subject, must be able to access only the information and resources that are necessary for its legitimate purpose.

The stateful HBS private key can be described as a set of one-time private keys 42, 43,..., 4n. The set comprises a predefined number of one-time private keys 42, 43, ..., 4n. In a typical scenario, the private key comprises a limited set of one-time private keys, e.g., up to 32, to limit the storage requirements in the secure element 41. The device 40 is responsible for making sure that each one-time private key is used only one time. There are various options to ensure that.

In one embodiment the secure element 41 implements an atomic operation that takes as input one one-time private key 42, 43, ..., 4n, in Fig. 7 one-time private key 42, and data to-be-signed and outputs a signature. The secure element 41 subsequently destroys the one-time private key 42 after the signing part of the operation was attempted. An atomic operation refers to a single, indivisible operation or action that appears to be executed instantaneously and cannot be divided further. In other words, it is a unit of operation that is treated as a whole and is guaranteed to be executed completely or not at all.

In a variation, the atomic operation comprises an operation to create and store a time stamp 52 directly after the signature and destruction operation. When another stateful HBS private key is needed, in the future, the next one-time private key 43 is used by the atomic operation that creates the next time stamp.

At a given point in time the secure element 41 will contain a number N of time stamps equal to the invocation of the stateful HBS signing operations. These timestamps 52 can be used to build a timeline of the events and correlate them with existing signatures to detect possible unauthorized usage of one-time private keys 42, 43,..., 4n. It is assumed that the secure element 41 cannot be tampered with, therefore the timestamps can be considered as reliable.

The implementation of a reliable time source is left out of scope of this ID. If a problem is detected with the timestamps, then the device is considered tampered and therefore not trustworthy altogether. The device 40 will execute an alert action to notify a user of the tampered secure element 41.

In another variation the secure element 41 comprises a secure counter and a random bit generator and generates a secret seed at initialization time. The secure element implements the random bit generator by a secure PRNG function. At initialization time a secret seed is generated in the secure element 41 itself. The atomic operation is then modified to take the counter, the seed and the data to-be-signed as input. The atomic operation comprises the following components: the first component receives the seed and the PRNG function as input to generate the one-time private key 42, 43,..., 4n, or a subset of it depending on the implementation of one-time private key generation function. The second component selects the one-time private key whose index is equal to the value of the counter, and the third component updates the counter, e.g., new_counter = old_counter +1. Component four digitally signs the data with the selected one-time private key.

This approach can be useful in case the secure element 41 does not have enough resources to hold all one-time private keys 42, 43, ..., 4n at once. It can also be used to improve anti-tampering measures. E.g., if the secure element 41 is equipped with a mechanism to detect physical compromises and triggers a zeroization of its secure memory or file system, the secure deletion of a single seed is faster or more efficient, than deleting several one-time private keys.

the manufacturer public key, meta-data and the local certificate represented by a hash value or in unmodified form, are published to a trust-worthy registry, which is accessible, and auditable, by the relying parties that will validate the manufacturer device certificate.

The first one-time private key is used to issue a self-signed local certificate locCert containing the corresponding sHBS public key. The sHBS public key together with additional meta-data, identifying the device 40 holding the one-time private keys 42, 43, ..., 4n, and a hash of the self-signed local certificate locCert is published to a trustworthy registry, which is accessible, and auditable, by all the relying parties that will validate the manufacturer device certificate MDCert. An example of such trustworthy registry can be a hash tree like one used by a Certificate Transparency log (see RFC9162).

The hash tree can be hosted internally by the manufacturer's private key infrastructure, i.e., in a trust center, or by an independent third-party organization which can additionally be publicly auditable, to further increase the level of trust afforded by this solution. The manufacturer must ensure that only authentic entries, i.e., devices, are published on the hash tree. This procedure is as critical as the issuance of a manufacturer device certificate MDCert. As an alternative implementation the meta-data can be published to the hash tree together with the complete self-signed local certificate locCert. In the trustworthy registry is structured as a hash tree containing the hash value of the local certificate as leave.

In case the device 40 needs a new local certificate locCert issued with an issuing CA certificate issCAcert, at any given point in time, the issuing CA can search the hash tree for the meta-data of the device 40 and the manufacturer device public key of the device 40 it intends to re-issue the local certificate locCert2. See also Fig.5. The self-signed local certificate locCert can be used as proof-of-private-key-possession. Alternatively, the device 40 can also issue a certificate signing request (CSR) according to Public Key Cryptography Standard Number 10, in short PKCS#10, or a Certificate Request Message Format (CRMF), for the first local certificate. This certificate signing request (CSR) contains the meta-data required to identify the device 40 and needed to issue local certificate locCert.

As an alternative implementation, the trustworthy registry can be realized as a distributed ledger.

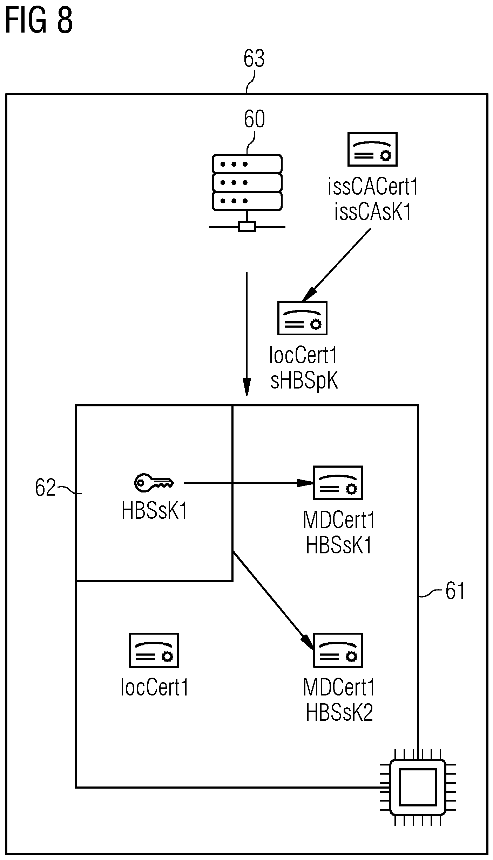

Fig. 8 illustrates an embodiment of the inventive system. The system is configured for crypto-agile issuance of a manufacturer device certificate MDCert1 to a device 61, the manufacturer device certificate MDCert1 attesting authenticity of the device 61 to a relying party. The system comprises a secure manufacturing environment which enables secure initialization of the device and a secure communication between the device 61 with an issuing CA 60 at least during manufacturing phase of the device 61.

The system further comprises the device 61 and the issuing certificate authority 60 and/or a root certification authority. The device 61 comprises a secret element 62 which generates and stores a sHBS private key HBSsK1 and an associated HBS public key according to a stateful Hash-Based Signature (sHBS) algorithm. Preferably, the secure element 62 generates and stores the manufacturer device private key and the associated manufacturer device public key.

The system is configured to perform during manufacturing phase the steps of the method as described above.

The certification authority is configured to issue a local certificate issCACert1 certifying the sHBS public key sHBSpK and signing the local certificate locCACert1 with a first digital signature algorithm using a private key of the certificate authority 60. The device 61 is configured to store
the local certificate locCert1 locally on the device 61. The device 60 generates the manufacturer private key and an associated manufacturer public key according to a second digital signature algorithm. The device 61 issues the manufacturer device certificate MDcert1 certifying the manufacturer public key and signing the manufacturer device certificate with the HSB signature algorithm using the sHBS private key sHBSsK1. If the first signature algorithm of the issuing CA 60 is deemed no longer secure the device 61 issues a new manufacturer device certificate MDCert1 using another one-time private key HBSsK2.

This approach allows the rollover of a manufacturer device certificate, e.g., an IDevID, at any time and without any direct involvement of the issuing CA, provided that the stateful HBS algorithm remains secure throughout the lifetime of the device. This feature is of great value because typically, manufacturer device certificates cannot be rolled over without returning the device to the manufacturer. This is necessary because if the underlying cryptographic algorithm is no longer secure, the risk of issuing a new manufacturer device certificate to the wrong device becomes too high.

Additionally, this approach enables multiple migrations. For example, if a first migration from traditional to post-quantum cryptography must be followed by another migration due to the first post-quantum algorithm being broken after some time, this mechanism would support it, making the device cryptographically agile for the rollover of manufacturer device certificates. The number of roll-over steps is at least limited to the number of stateful HBS private one-time private keys.

It is to be understood that the above description of examples is intended to be illustrative and that the illustrated components are susceptible to various modifications. For example, the illustrated concepts could be applied for different technical systems and especially for different sub-types of the respective technical system with only minor adaptions.

## Claims

1. Computer-implemented method for crypto-agile issuance of a manufacturer device certificate (MDCert) to a device (21), the manufacturer device certificate (MDCert) attesting authenticity of the device (21) to a relying party, comprising the steps performed during manufacturing phase of the device (21),
- initializing (S1) onto the device, (21) a sHBS private key (HBSsK) and an associated sHBS public key according to a stateful Hash-Based Signature (sHBS) algorithm,
- issuing (S2), by a certification authority (20), a local certificate (locCert) certifying the HBS public key (HBSpK) and signing the local certificate (locCert) with a first digital signature algorithm using a private key of the certificate
- generating (S4), by the device (21), a manufacturer private key and an associated manufacturer public key according to a second digital signature algorithm,
- issuing (S5), by the device (21) to the device (21), the manufacturer device certificate (MDCert) certifying the manufacturer public key and signing the manufacturer device certificate (MDCert) with the HSB signature algorithm using the sHBS private key (HBSsK).

2. Computer-implemented method according to claim 1, wherein
after the manufacturing phase if the first digital signature algorithm (sigCA) of the certification authority (20) is no longer considered secure,
issuing a new local certificate (nlocCert) to the device (21) certifying the same sHBS public key (HBSpK), but the new local certificate (nlocCert) is signed by a different first signature algorithm (nsigCA) which is considered secure at the time of issuing the new local certificate (nlocCert).

3. Computer-implemented method according any of the preceding claims, wherein when the second digital signature algorithm is no longer considered secure, a new manufacturer device certificate (MDCert) is issued by the device (21) to itself, certifying a new manufacturer public key and signing the new manufacturer device certificate (MDpK2) with a new sHBS private key (HBSpK2) using a one-time private key which is available in the device (21).

4. Computer-implemented method according to any of the pre-ceding claims, wherein the new manufacturer public key (MDpK2) is generated by cryptographic primitives according to a new second digital signature algorithm which were transferred to the device (21).

5. Computer-implemented method according to any of the pre-ceding claims, wherein the manufacturer device certificate (MDCert) is used to enable additional capabilities for the device (21), preferably the manufacturer device certificate (MDCert) is used to enroll an operational certificate issued by a customer certification authority.

6. Computer-implemented method according to any of claim 3-5, wherein the sHBS private key (HBSsK) is stored in, and the one-time private key (42, 43, ..., 4n) is provided by a secure element (41,62) located directly within the device (20, 40, 60) .

7. Computer-implemented method according to claim 6, wherein access to the content of the secure element (20, 40, 60) is restricted following a "Principle of Least Privilege".

8. Computer-implemented method according to any of claims 6-7, wherein a set of one-time private keys (42, 43,..., 4n) is stored at the secure device (41, 62), the set comprising a predefined number of one-time private (42, 43,..., 4n), and the secure element (41, 62) comprises an atomic, indivisible operation which receives one one-time key (42) of the set of sHBS one-time keys (42, 43,..., 4n) and data to be signed as input, output a sHBS signature of the data and destroys the sHBS one-time private key (42) after the signature is created.

9. Computer-implemented method according to claim 8, wherein the atomic operation additionally contains a time stamp creation and storage operation which generates and stores a time stamp (52) when each of the one-time private keys (42, 43,..., 4n) is used and stores the time stamp (52) in the secure element (41, 62), wherein the device (20, 40, 60) is considered to be tampered if the temporal sequence of the time stamps (52) is interrupted.

10. Computer-implemented method according to any of claims 6-7, wherein the secure element (41, 62) comprises a secure counter and a random bit generator, and generates a secret seed at initialization time, wherein an atomic operation in the secure element (41, 62)
- generates the one-time private key using the seed and an index generated by the random bit generator,
- selects the one-time private key whose index is equal to the value of the counter,
- increments the counter, and
- digitally signs the data with the selected one-time private key.

11. Computer-implemented method according to any of the pre-ceding claims, wherein the manufacturer public key MDpK, me-ta-data and the local certificate represented by a hash value or in unmodified form, are published to a trustworthy registry, which is accessible, and auditable, by the relying parties that will validate the manufacturer device certificate (MDCert).

12. Computer-implemented method according to claim 11, where-in the trustworthy registry is structured as a hash tree containing the hash value of the local certificate (locCert) as leave or the trustworthy registry is realized as a distributed ledger.

13. System for crypto-agile issuance of a manufacturer device certificate (MDC) to a device (61), the manufacturer device certificate attesting authenticity of the device (61) to a relying party, comprising a secure manufacturing environment (63), a device (61) and a certificate authority (60), configured to perform the steps during manufacturing phase of the device (61):
- initializing (S1) onto the device, (61) a sHBS private key (HBSsK) and an associated sHBS public key according to a stateful Hash-Based Signature (sHBS) algorithm,
- issuing (S2), by a certification authority (60), a local certificate (locCert) certifying the HBS public key (HBSpK) and signing the local certificate (locCert) with a first digital signature algorithm using a private key of the certificate
- generating (S4), by the device (61), a manufacturer private key and an associated manufacturer public key according to a second digital signature algorithm,
- issuing (S5), by the device (61) to the device (61), the manufacturer device certificate (MDCert) certifying the manufacturer public key and signing the manufacturer device certificate (MDCert) with the HSB signature algorithm using the sHBS private key (HBSsK).

14. A computer program product directly loadable into an in-ternal memory of at least two digital computers, comprising software code portions for performing the steps of claim 1-12 when said product is run on said digital computers.
